# EUROPEAN PATENT APPLICATION

(11) **EP 1 454 779 A2**
(43) Date of publication of application: **08.09.2004**
(21) Application number: 04250898.6
(22) Date of filing: 19.02.2004
(51) Int. Cl.: B60H 1/00

(54) **Bracket for attachment of receiver**

(30) Priority: 05.03.2003 JP 2003058295
(71) Applicant: Sanden Corporation, Isesaki-shi, Gunma 372-8502 (JP)
(72) Inventor: Wada, Kenichi, Isesaki-shi, Gunma 372-8502 (JP); Sakamoto, Takenori, Isesaki-shi, Gunma 372-8502 (JP)
(74) Representative: Haley, Stephen

(57) **Abstract**

In a bracket (1) for attachment of a receiver (4) having a first bracket member (2) and a second bracket member (3), the engagement structure formed by an engaging groove (8) and an engaging projection (9) is constructed in a form so that the first and second bracket members (2, 3) are engaged with and disengaged from each other by swinging one or both of the bracket members (2, 3) in a radial direction of the receiver (4). The workability for the engagement and disengagement can be greatly facilitated the range for application of the bracket structure can be enlarged, and lightening and cost down can be expected.

## Description

The present invention relates to a bracket for attachment of a receiver, and, more specifically, to a bracket for attachment of a receiver suitable for attachment of a receiver used in a refrigerant circuit of an air conditioning unit for vehicles.

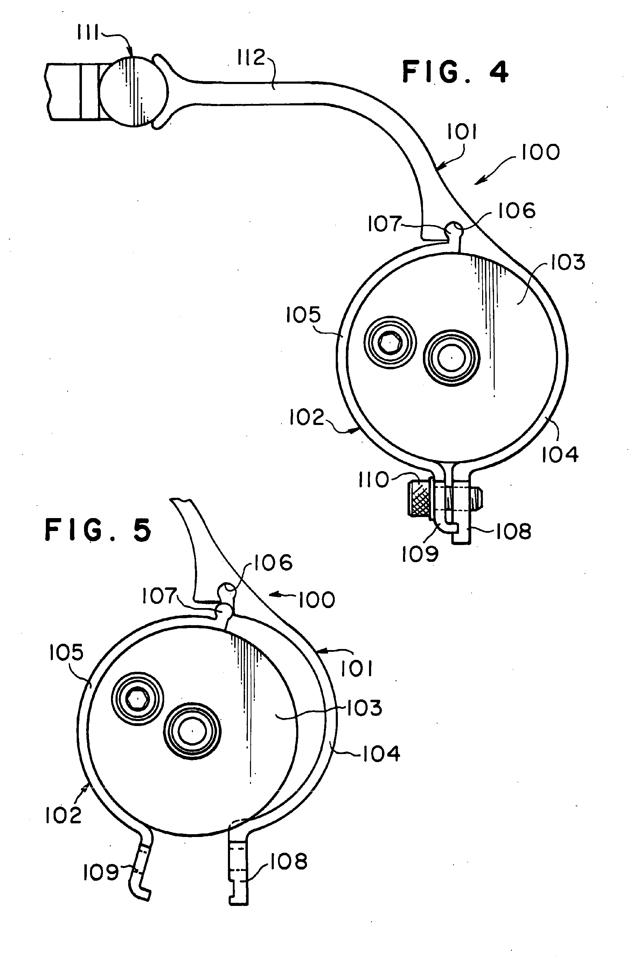

As a conventional bracket for attaching a receiver to a condenser of an air conditioning unit for vehicles, for example, Japanese Patent No. 3,100,351 discloses a bracket having such a structure as shown in Figs. 4 and 5. In Fig. 4, a bracket 100 for attachment of a receiver 103 has a first bracket member 101 and a second bracket member 102 formed from a metal, for example, aluminum or an aluminum alloy. First bracket member 101 has a receiver holding portion 104 which holds a part of the periphery of receiver 103 along the circumferential direction of the receiver 103, and second bracket member 102 has a receiver holding portion 105 which holds the other part of the periphery of receiver 103 along the circumferential direction of the receiver 103. At one end of receiver holding portion 104 of first bracket member 101, a slide fitting groove 106 is provided, and the slide fitting groove 106 extends in the width direction of first bracket member 101 (in the direction perpendicular to the sheet depicting Fig. 4) over the entire width of first bracket member 101 or a part of the width. This slide fitting groove 106 has a cross-sectional shape widened in its depth direction. A slide fitting projection 107 is provided at one end of receiver holding portion 105 of second bracket member 102, and the slide fitting projection 107 extends in the width direction of second bracket member 102 (in the direction perpendicular to the sheet depicting Fig. 4) over the entire width of second bracket member 102 or a part of the width. This slide fitting projection 107 is fitted into slide fitting groove 106 of first bracket member 101.

Fastening portions 108 and 109 are provided on the other ends of receiver holding portions 104 and 105 of first and second bracket members 101 and 102, respectively. These fastening portions 108 and 109 are fastened via a bolt 110. Further, an attachment portion 112 is provided to first bracket member 101 for attaching receiver 103 to a condenser 111 via bracket 100. The attachment portion 112 may be fixed to condenser 111, for example, by brazing.

In the bracket 100 for attachment of receiver 103, since slide fitting groove 106 and slide fitting projection 107 provided on the ends of receiver holding portions 104 and 105 of first and second bracket members 101 and 102 form an engagement structure and fastening portions 108 and 109 provided on the other ends of receiver holding portions 104 and 105 form a fastening structure, receiver 103 may be held by receiver holding portions 104 and 105 in the circumferential direction substantially over the entire periphery, and the receiver 103 may be strongly attached to condenser 111.

In such a conventional structure of bracket 100 for attachment of a receiver, however, because slide fitting groove 106 is formed in a shape widened in the depth direction, slide fitting projection 107, which is to be fitted into the groove 106, is also formed in a shape widened in the direction toward the tip. Therefore, as shown in Fig. 5, it is impossible to fit the projection 107 into the groove 106 by swinging one of first and second bracket members 101 and 102 from the radial direction of receiver 103. Namely, when the engagement structure described above is formed, only one manner is employed, wherein, while first bracket member 101 or second bracket member 102, or both, are moved in the axial direction of receiver 103, slide fitting groove 106 and slide fitting projection 107 are engaged to each other by positioning them. Therefore, the freedom of the working for the attachment and detachment may be greatly decreased. Especially, when the structure is employed in a refrigerant circuit of an air conditioning unit for vehicles, because a space for the working in the attachment and detachment is fairly restricted, there may be a case where the attachment and detachment become substantially impossible, and the application of providing a receiver may be restricted within a specified small range.

Further, if first bracket member 101 having groove 106 with a shape widened in the depth direction or second bracket member 102 having projection 107 widened in the direction toward the tip is to be formed, for example, by an injection molding, the structure of the molds may become extremely complicated. Therefore, the method for forming first and second bracket members 101 and 102 is limited to an extrusion molding whose extrusion direction is set to the width directions of the members. However, because there is a limit for thinning a formed product (particularly, the portion of slide fitting projection 107) in the extrusion molding, it is difficult to lighten the bracket member, ultimately, the whole of the bracket, and to reduce the cost thereof.

It would be desirable to provide a bracket for attachment of a receiver which can increase the workability for attaching and detaching the bracket, can enlarge the range of the application thereof, and can lighten the bracket and reduce the cost of the bracket.

A bracket for attachment of a receiver according to the present invention has a first bracket member for holding a part of a periphery of the receiver along a circumferential direction of the receiver and a second bracket member for holding the other part of the periphery of the receiver along the circumferential direction of the receiver. The first bracket member has an engaging groove extending in a width direction of the first bracket member at one end of a receiver holding portion of the first bracket member in the circumferential direction thereof, and the second bracket member has an engaging projection extending in a width direction of the second bracket member and engaging with the engaging groove at one end of a receiver holding portion of the second bracket member in the circumferential direction thereof. The engaging groove and the engaging projection form an engagement structure by engagement with each other. The other ends of the receiver holding portion of the first bracket member and the receiver holding portion of the second bracket member are fastened to each other by a fastening means (for example, a bolt). The bracket is characterized in that the engagement structure is constructed in a form so that the first bracket member and the second bracket member are engaged with and disengaged from each other by swinging the first bracket member or the second bracket member, or both, in a radial direction of the receiver.

In the present invention, the forms of the above-described engaging groove and engaging projection are not particularly restricted. Namely, any forms may be designed as long as the target engagement structure is achieved by swinging one or both of the bracket members in the radial direction of the receiver. For example, the cross sections of the engaging groove and the engaging projection may be formed as a hook shape.

In the bracket for attachment of a receiver according to the present invention, the engagement structure due to the engaging groove and the engaging projection can be easily formed and can be surely engaged with and disengaged from each other, by swinging the first bracket member or the second bracket member, or both, in a radial direction of the receiver, or by sliding one or both of them in the axial direction of the receiver. Therefore, because the directional restriction in the working for the attachment and the detachment as in the conventional structure is solved, the ability for assembly and maintenance can be improved. Further, by solving the directional restriction in the working for the attachment and the detachment, it becomes possible to attach the receiver at a place which has been avoided because of difficulty of the attachment and the detachment. Therefore, the range capable of being applied with the bracket according to the present invention may be enlarged. for example, may be applied to various types of vehicles.

Further, in the bracket for attachment of a receiver according to the present invention, the engaging groove and the engaging projection can be formed as a hook shape in cross section. In this case, it becomes possible to form the engaging projection of the second bracket member from a bent portion which is formed by bending one end of the second bracket member. Therefore, it becomes possible to construct the whole of the second bracket member from a pressed product which is made by pressing a single plate member. Consequently, the second bracket member, ultimately, the whole of the bracket, may be lightened and reduced in cost.

Further features and advantages of the present invention will be understood from the following detailed description of the preferred embodiment of the present invention with reference to the accompanying figures, of which:
Fig. 1 is a plan view of a bracket for attachment of a receiver according to an embodiment of the present invention.
Figs. 2A and 2B are plan views of a second bracket member of the bracket depicted in Fig. 1, showing a process for forming the second bracket member.
Figs. 3A-3D are plan views of the bracket depicted in Fig. 1, showing a process for holding a receiver using the bracket.
Fig. 4 is a plan view of a conventional bracket for attachment of a receiver.
Fig. 5 is an exploded plan view of the bracket depicted in Fig. 4.

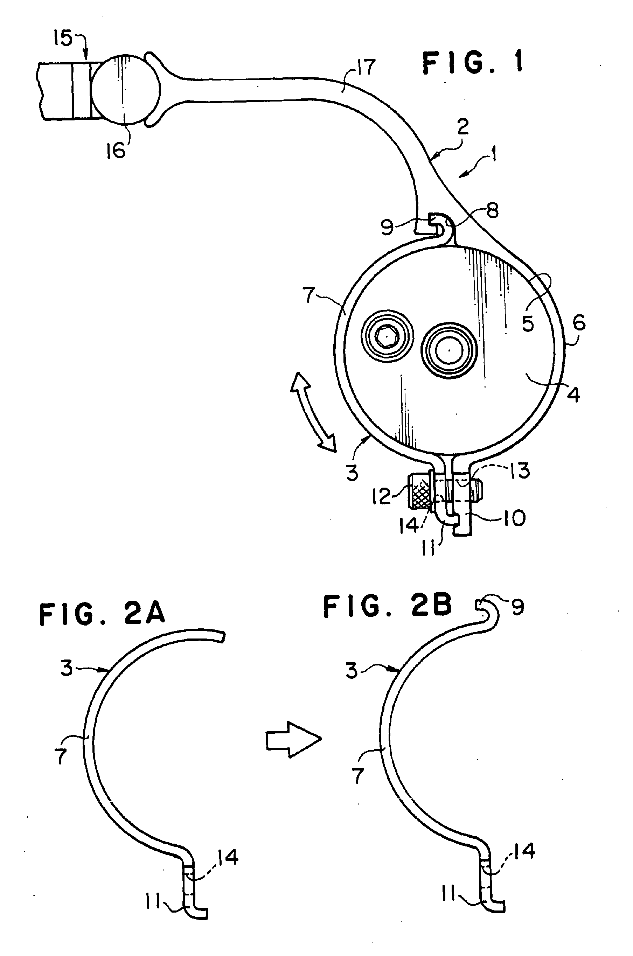

Figs. 1 to 3 show a bracket for attachment of a receiver according to an embodiment of the present invention. A bracket 1 has a first bracket member 2 and a second bracket member 3. First and second bracket members 2 and 3 may be made from a metal (for example, aluminum or an aluminum alloy) or a resin. First bracket member 2 has a receiver holding portion 6 which holds a part of the periphery 5 of receiver 4 in the circumferential direction (in this embodiment, about a half of the entire circumference). Second bracket member 3 has a receiver holding portion 7 which holds the other part of the periphery 5 of receiver 4 in the circumferential direction (in this embodiment, about a remaining half of the entire circumference).

A hook-shaped engaging groove 8 is provided on one end of receiver holding portion 6 of first bracket member 2. Engaging groove 8 extends in the width direction of first bracket member 2 (in the direction perpendicular to the sheet depicting Fig. 1) over the entire width of first bracket member 2 or a part of the width. A hook-shaped engaging projection 9 is provided on one end of receiver holding portion 7 of second bracket member 3. Engaging projection 9 is inserted into and engaged with engaging groove 8. By this engagement of engaging groove 8 and engaging projection 9, an engagement structure is formed on both receiver holding portions 6 and 7.

Second bracket member 3 is formed as a pressed product in this embodiment. As shown in Fig. 2A, a single plate member is pressed, and receiver holding portion 7 and a fastening portion 11 and a hole 14 are formed. Then, as shown in Fig. 2B, one end of receiver holding portion 7 is bent to form a bent portion as engaging projection 9. Where, these receiver holding portion 7, fastening portion 11, hole 14 and engaging projection 9 may be formed by a single-time pressing.

Fastening portions 10 and 11 are provided on the other ends of receiver holding portions 6 and 7 of first and second bracket members 2 and 3, respectively. Holes 13 and 14 are provided on fastening portions 10 and 11, respectively, and both of them are strongly fastened to each other by using a bolt 12. By the engagement structure due to the ends of receiver holding portions 6 and 7 and the fastening structure due to the other ends of receiver holding portions 6 and 7, receiver 4 can be strongly held almost over the entire length of the periphery in the circumferential direction of the receiver 4.

In this embodiment, an attachment portion 17 is provided on one side of receiver holding portion 6 of first bracket member 2. Attachment portion 17 is fixed to a header 16 of a condenser 15, for example, by brazing.

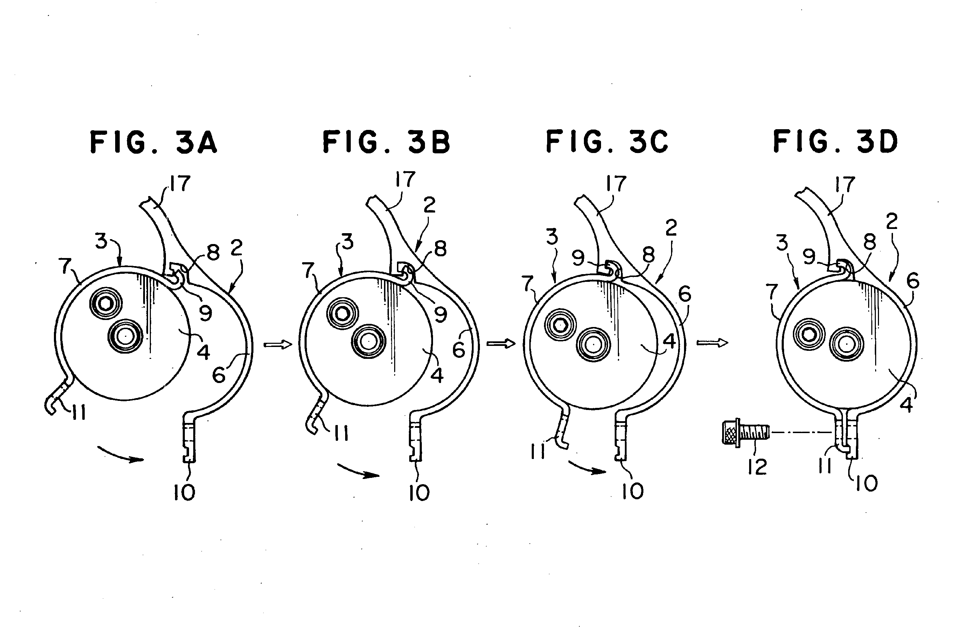

In the bracket according to the above-described embodiment, the engaging structure formed on one side of receiver holding portions 6 and 7 can be easily engaged and disengaged. As shown in Fig. 3A, engaging projection 9 is inserted into engaging groove 8. In this state, as shown in Figs. 3B and 3C, second bracket member 3 is gradually swung in the direction toward first bracket member 2 along the radial direction of receiver 4. Then, as shown in Fig. 3D, the engaging structure is completed by bringing both fastening portions 10 and 11 into contact with each other. Thereafter, both fastening portions 10 and 11 are fastened to each other by using bolt 12 to complete the fastening structure.

On the other hand, when the engaging structure is disengaged, first, the fastening of fastening portions 10 and 11 is released by removing bolt 12. Then, second bracket member 3 is swung in a direction separating the second bracket member 3 from first bracket member 2 (that is, in a direction opposite to the direction of the above-described engagement operation) along the radial direction of receiver 4. Thus, the disengagement can also be easily achieved.

Further, in the bracket according to the above-described embodiment, another method may be employed for completing the engagement and the disengagement. Namely, also by positioning engaging groove 8 and engaging projection 9 and by sliding one or both of them in the axial direction of receiver 4 (in the direction perpendicular to the sheets depicting Figs. 1 and 2), the engaging and the dis engaging can be easily achieved.

Thus, in the bracket according to the above-described embodiment, merely by swinging first or second bracket member 2 or 3, or both, in the radial direction of receiver 4 or by sliding one or both of them in the axial direction of receiver 4, the engaging and the disengaging of the engagement structure due to engaging groove 8 and engaging projection 9 can be easily achieved. Therefore, the directional restriction for the engagement and disengagement can be solved, and the ability for the assembly and the maintenance may be greatly improved. Further, by removing such a directional restriction, it becomes possible to attach the receiver at a place which has been avoided because of the difficulty of the working for the engagement and the disengagement. Therefore, the range of the bracket structure capable of being applied can be greatly enlarged to various types of vehicles, etc.

Furthermore, in this embodiment, since second bracket member 3 is constructed from a pressed product and engaging projection 9 can be formed by bending one end of receiver holding portion 7, the thickness of engaging projection 9 can be greatly reduced as compared with that of the conventional slide fitting projection 107 formed by extrusion molding as shown in Figs. 4 and 5, and can be reduced in weight and cost. However, second bracket member 3 in this embodiment can be easily formed by any other forming method such as casting or injection molding.

## Claims

1. A bracket for attachment of a receiver having a first bracket member for holding a part of a periphery of said receiver along a circumferential direction of said receiver and a second bracket member for holding the other part of the periphery of said receiver along the circumferential direction of said receiver, said first bracket member having an engaging groove extending in a width direction of said first bracket member at one end of a receiver holding portion of said first bracket member in the circumferential direction thereof, said second bracket member having an engaging projection extending in a width direction of said second bracket member and engaging with said engaging groove at one end of a receiver holding portion of said second bracket member in the circumferential direction thereof, said engaging groove and said engaging projection forming an engagement structure by engagement with each other, the other ends of said receiver holding portion of said first bracket member and said receiver holding portion of said second bracket member being fastened to each other by a fastening means, **characterized in that** said engagement structure is constructed in a form so that said first bracket member and said second bracket member are engaged with and disengaged from each other by swinging said first bracket member or said second bracket member, or both, in a radial direction of said receiver.

2. The bracket for attachment of a receiver according to claim 1, wherein cross sections of said engaging groove and said engaging projection are formed as a hook shape.

3. The bracket for attachment of a receiver according to claim 1 or 2, wherein said second bracket member is formed by pressing.

4. The bracket for attachment of a receiver according to claim 3, wherein said engaging projection is formed by bending.

5. The bracket for attachment of a receiver according to any preceding claim, wherein an attachment portion is provided to said first bracket member or said second bracket member, or both, for attaching said receiver to a condenser via the bracket.
